# EUROPEAN PATENT APPLICATION

(11) **EP 2 116 850 A1**
(43) Date of publication of application: **11.11.2009**
(21) Application number: 08710629.0
(22) Date of filing: 30.01.2008
(51) Int. Cl.: G01N 35/00

(54) **ANALYZER**

(30) Priority: 02.02.2007 JP 2007024585
(71) Applicant: Olympus Corporation, Tokyo 151-0072 (JP)
(72) Inventor: IMAI, Naoya, Tokyo 151-0072 (JP)
(74) Representative: von Hellfeld, Axel
(86) International application number: PCT/JP2008/051370
(87) International publication number: WO 2008/093708

(57) **Abstract**

An analyzer according to the present invention is an analyzer (1) that performs a calibration process actually using a reagent that corresponds to an analytical item and setting a calibration curve. The analyzer has a storage unit (35) that stores calibration results of already-performed calibration processes in association with elapsed time after unsealing of the reagent for each analytical item; and a setting unit (32) that searches the storage unit for the calibration result having the same analytical item and elapsed time after the unsealing of the reagent as the reagent to be calibration-processed and sets the calibration curve using the calibration result being searched for.

## Description

### TECHNICAL FIELD

The present invention relates to an analyzer that sets a calibration curve by actually using a reagent corresponding to an analytical item.

### BACKGROUND ART

Conventionally, analyzers have been known which automatically analyze specimens such as blood and other bodily fluids. Those analyzers add specimens into reaction vessels into which reagents have been dispensed and then optically detect reactions between the reagents and the specimens in the reaction vessels. Such analyzers maintain analysis accuracy by performing a calibration process for each analytical item at predetermined timings and also at a time when a reagent is supplied. In the calibration process, a reagent corresponding to an analytical item is actually used and an analysis is performed on a reference substance that is supposed to produce a known result. A calibration curve, which is used as a reference for a photometry process, is set based on the analysis result of the reference substance.

To carry out the calibration process, an operator needs to perform an arrangement process of the reagent and a preparation process of the reference substance. The operator checks the result of the measurement on the reference substance to confirm that the measurement of the reference substance has been performed without a problem, and then actually starts the analysis process on each specimen to be analyzed. Thus, the operator needs to perform the arrangement process of the reagent and the preparation process of the reference substance for the calibration process, and also needs to stay near the analyzer for confirming the result of the measurement on the reference substance. These are troublesome for the operator. Methods for lessening the burden on the operator when performing the calibration process have been proposed, e.g., a method of performing the calibration process in a period of spare time before a measurement process that actually uses a supplied reagent is performed, a method of using a calibration curve that has been used for the reagent corresponding to the same analytical item, and a method of storing the result of the calibration curve in a medium such as a barcode attached to a reagent vessel and reading out the result of the calibration curve using an apparatus (see Patent Document 1).

Patent Document 1: Japanese Patent Application Laid-open No. 2004-340649

### DISCLOSURE OF INVENTION

### PROBLEM TO BE SOLVED BY THE INVENTION

However, in the case of making use of the period of spare time for performing the calibration process, there is no spare time when the analysis using the supplied reagent is desired to be started immediately after the reagent is supplied. Thus, the calibration process has to be performed right after the reagent is supplied, and the burden on the operator is not lessened for performing the calibration process.

Also, in the case of using a calibration curve that has been used for the reagent corresponding to the same analytical item, the result of the calibration curve that has been set in the last calibration process is used. In the last calibration process, a reagent that has been unsealed for a long period of time is used in most cases. Then, the activity state of the reagent that has been unsealed for a long period of time is likely to have changed and be different from that of the reagent that has been just opened. Thus, in the case of using, after the reagent is supplied, the calibration curve that has been set in the last calibration process, it is difficult to maintain analysis accuracy at a required level.

Furthermore, in the case of using an apparatus for reading out the result of the calibration curve stored in a medium such as a barcode attached to a reagent vessel, dispense accuracy or photometry accuracy which is unique to each apparatus cannot be reflected on the calibration curve. Thus, in the case of using the result of the calibration curve stored in the medium such as a barcode attached to the reagent vessel, it is difficult to maintain analysis accuracy at a required level.

The present invention is made in view of the above problems of the conventional technology. An object of the present invention is to provide an analyzer that can maintain its analysis accuracy and lessen the burden on the operator caused by the calibration process.

### MEANS FOR SOLVING PROBLEM

To solve the problem described above and achieve the object, an analyzer according to the present invention which performs a calibration process actually using a reagent that corresponds to an analytical item, includes: a storage unit that stores calibration results of already-performed calibration processes in association with elapsed time after unsealing of the reagent for each analytical item; and a setting unit that searches the storage unit for the calibration result having the same analytical item and elapsed time after the unsealing of the reagent as the reagent to be calibration-processed and sets a calibration curve using the calibration result being searched for.

In the analyzer according to the present invention, the storage unit stores lot information of the reagent used for each calibration process in association with each calibration result; and the setting unit sets the calibration curve using the calibration result being searched for when the lot information of the reagent to be calibration-processed is the same as the lot information of the reagent corresponding to the calibration result being searched for.

In the analyzer according to the present invention, the setting unit sets, when the reagent is newly supplied to the analyzer, the calibration curve using the calibration result having the same analytical item and elapsed time after the unsealing of the reagent as the supplied reagent.

In the analyzer according to the present invention, the setting unit further includes a selection unit that is capable of selecting whether or not the calibration curve is set using the calibration result stored in the storage unit.

### EFFECT OF THE INVENTION

According to the present invention, the calibration curve is set using the calibration result that corresponds to the analytical item and the elapsed time after the unsealing of the reagent to be calibration-processed. Thus, the calibration curve, which is not much affected by the activity state of the reagent that changes due to the elapsed time after the unsealing of the reagent, can be set without performing the calibration process. Therefore, analysis accuracy can be maintained and the burden on the operator caused by the calibration process can be lessened.

### BRIEF DESCRIPTION OF DRAWINGS

FIG. 1 is a schematic diagram showing main components of an analyzer in accordance with an embodiment.
FIG. 2 is a flowchart showing a calibration-result usage process performed when a reagent is supplied to the analyzer.
FIG. 3 is an illustration showing a menu displayed on a display screen of an output unit shown in FIG. 1.
FIG. 4 is an illustration explaining the calibration result-usage process performed by the analyzer shown in FIG. 1.

### EXPLANATIONS OF LETTERS OR NUMERALS

- 1: Analyzer
- 2: Measurement system
- 3: Control system
- 11: Specimen transfer unit
- 11a: Specimen vessel
- 11b: Specimen rack
- 12: Specimen dispensing system
- 12a, 17a: Arm
- 13: Reaction table
- 14: Reagent container
- 15: Reagent vessel
- 16: Reading unit
- 17: Reagent dispensing system
- 18: Stirring unit
- 19: Photometry unit
- 20: Washing unit
- 21: Reaction vessel
- 31: Control unit
- 32: Setting unit
- 33: Input unit
- 34: Analysis unit
- 35: Storage unit
- 36: Output unit

### BEST MODE(S) FOR CARRYING OUT THE INVENTION

An analyzer in accordance with an embodiment of the present invention will be described with reference to the accompanying drawings, taking an analyzer that measures optical characteristics of specimens as an example. The embodiment does not limit the scope of the invention. In the description of the drawings, the same components are denoted with the same numerals.

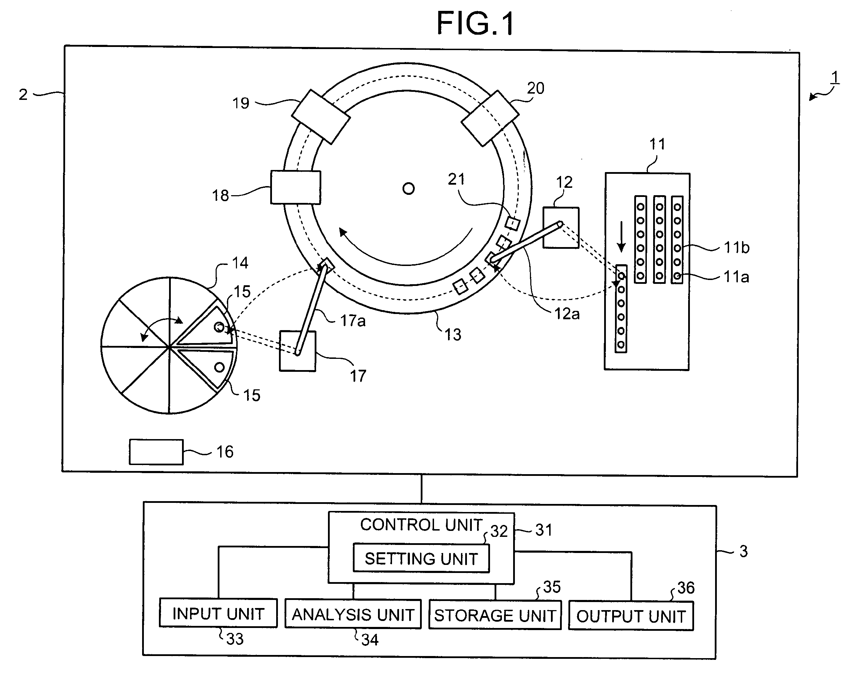

FIG. 1 is a schematic diagram showing a configuration of an analyzer 1 in accordance with the embodiment. As shown in FIG. 1, the analyzer 1 includes a measurement system 2 and a control system 3. The measurement system 2 dispenses each of a specimen to be analyzed and a reagent into a reaction vessel 21 and optically measures reactions occurring in the reaction vessel 21. The control system 3 controls the whole analyzer 1 including the measurement system 2 and analyzes the measurement result by the measurement system 2. In the analyzer 1, these two systems cooperate so as to automatically perform a biochemical, immunological, or genetic analysis on plural specimens.

The measurement system 2 mainly includes a specimen transfer unit 11, a specimen dispensing system 12, a reaction table 13, a reagent container 14, a reading unit 16, a reagent dispensing system 17, a stirring unit 18, a photometry unit 19, and a washing unit 20.

The specimen transfer unit 11 includes plural specimen racks 11b each of which holds plural specimen vessels 11a containing liquid specimens such as blood and urine. The specimen rack 11b sequentially transfers the specimen vessels 11a in a direction along the arrow in FIG. 1. The specimen contained in the specimen vessel 11a that has been transferred to a predetermined position on the specimen transfer unit 11 is dispensed by the specimen dispensing system 12 into the reaction vessel 21 arranged and transferred on the reaction table 13.

The specimen dispensing system 12 includes an arm 12a that can move vertically up and down and can rotate around a vertical axis that crosses the base part of the arm. The arm 12a has a probe for sucking in and discharging specimens attached to its tip end. The specimen dispensing system 12 includes a suction-discharge syringe (not shown) or a suction-discharge system using a piezoelectric device (not shown). The specimen dispensing system 12 uses the probe and sucks in the specimen contained in the specimen vessel 11a that has been transferred to a predetermined position on the specimen transfer unit 11 described above, rotates the arm 12a in the clockwise direction as shown in FIG. 1, and discharges to dispense the specimen into the reaction vessel 21.

The reaction table 13 transfers the reaction vessel 21 to predetermined positions for dispensing the specimens and reagents into the reaction vessel 21, for stirring, for washing, and for photometry. The reaction table 13 can be rotated around a rotation axis, which is a vertical axis that passes the center of the reaction table 13, by a driving system (not shown) that is driven under the control of a control unit 31. A lid (not shown) that can be opened and closed and a constant-temperature chamber (not shown) are arranged above and below the reaction table 13, respectively.

The reagent container 14 can store plural reagent vessels 15 each of which contains the reagent to be dispensed into the reaction vessel 21. In the reagent container 14, plural storage rooms are arranged at regular intervals, and each storage room stores the reagent vessel 15 in a detachable manner. The reagent container 14 can be rotated around a rotation axis, which is a vertical axis that passes the center of the reagent container 14, in the clockwise or the counterclockwise direction so as to transfer the desired reagent vessel 15 to a position where the reagent is sucked in by the reagent dispensing system 17. A lid (not shown) that can be opened and closed is arranged above the reagent container 14, and a constant-temperature chamber (not shown) is arranged below the reagent container 14. Thus, when the reagent vessel 15 is stored in the reagent container 14 and the lid is closed, the reagent contained in the reagent vessel 15 is maintained at a constant temperature and is prevented from evaporating or degenerating.

Attached to the side surface of the reagent vessel 15 is a storage medium that stores reagent information concerning the reagent contained in the reagent vessel 15. The storage medium displays various kinds of coded information and can be optically read out. The reading unit 16 that optically reads the storage medium is arranged near the periphery of the reagent container 14. The reading unit 16 reads out the information on the storage medium by emitting infrared light or visible light toward the storage medium and then processing reflection light from the storage medium. Alternatively, the reading unit 16 may capture-process the storage medium and may obtain the information on the storage medium by deciphering the capture-processed image information. When the lid of the reagent container 14 is opened, the reading unit 16 determines that a new reagent vessel 15 is stored in the reagent container 14 and reads out the information on the storage medium attached to the reagent vessel 15. The reading unit 16 reads out information mediums of all reagent vessels 15 in the reagent container 14. Alternatively, when the reagent container 14 has a sensor for detecting the storage of the reagent vessel 15 in each storage room, the reading unit 16 may read, based on the detection result of the sensor, the storage medium that is determined to be newly supplied to the reagent container 14.

Similarly to the specimen dispensing system 12, the reagent dispensing system 17 includes an arm 17a that has a probe for sucking in and discharging specimens attached to its tip end. The arm 17a can move vertically up and down and rotate around a central axis, which is a vertical axis that crosses the base part of the arm 17a. The reagent dispensing system 17 uses the probe and sucks in the reagent contained in the reagent vessel 15 that has been transferred to a predetermined position on the reagent container 14, rotates the arm 17a in the clockwise direction as shown in FIG. 1, and dispenses the reagent into the reaction vessel 21 that has been transferred to a predetermined position on the reaction table 13. The stirring unit 18 stirs the specimen and the reagent dispensed into the reaction vessel 21 so as to facilitate the reaction.

The photometry unit 19 irradiates the reaction vessel 21 that has been transferred to a predetermined photometry position with a light and performs an intensity measurement by receiving light that has passed through the liquid in the reaction vessel 21. The measurement result by the photometry unit 19 is output to the control unit 31 and analyzed by an analysis unit 34.

The washing unit 20 uses a nozzle (not shown) and sucks out mixed solution in the reaction vessel 21 that has been measured and discharges the same. Then, the washing unit 20 injects a washing liquid such as detergent and washing water into the reaction vessel 21 and sucks out the same so that the reaction vessel 21 is washed. The reaction vessel 21 that has been washed is used again. Alternatively, the reaction vessel 21 may be disposed after one measurement depending on the contents of the measurement.

Subsequently, the control system 3 is described below. The control system 3 includes the control unit 31, an input unit 33, the analysis unit 34, a storage unit 35, and an output unit 36. Each of the units included in the measurement system 2 and the control system 3 are electrically connected to the control unit 31.

The control unit 31 includes a CPU and the like and controls processes and operations in each of the units of the analyzer 1. The control unit 31 performs a predetermined input-output control on information that is input and output among the units and performs a predetermined information possessing on the information. The input unit 33 includes a keyboard, a mouse, and the like and obtains various kinds of information required for the analysis of the specimen and instruction information for analysis operations from the outside. To analyze constituents of the specimen, the analysis unit 34 calculates absorbance and the like based on the measurement result obtained from the photometry unit 19.

The storage unit 35 includes a hard disk, which magnetically stores information, and a memory, which loads various programs related to a process from the hard disk and electrically stores the programs therein when the analyzer 1 performs the process. The storage unit 35 stores various pieces of information including the analysis result and the like about the specimen. The analyzer 1 analyzes the reference substance, which produces a known result, actually using a reagent that corresponds to an analytical item and then performs a calibration process for setting a calibration curve as a reference for the photometry process based on the analysis result of the reference substance. The storage unit 35 stores therein calibration results of the calibration processes that have been performed for each analytical item. The stored calibration results are associated with the elapsed time after the unsealing of the reagent. The storage unit 35 stores therein lot numbers, i.e., lot information, of the reagent used for each calibration process in association with the result of each calibration result. The storage unit 35 may further include a supplementary storage device that can read out information stored in a storage medium such as a CD-ROM, DVD-ROM, and PC card.

The output unit 36 includes a display, a printer, a communication system, and the like. The output unit 36 outputs various kinds of information including the analysis result of the specimen. The output unit 36 may output information that has a predetermined format to an external apparatus (not shown) using a communication network (not shown).

The control unit 31 includes a setting unit 32. The setting unit 32 searches the storage unit 35 for a calibration result that corresponds to the analytical item and the elapsed time after the unsealing of the reagent to be calibration-processed. Then, a calibration curve is set using the calibration result obtained through the searching. When a production lot of the reagent to be calibration-processed is matched with a production lot of the reagent that corresponds to the calibration result being searched for, the setting unit 32 sets the calibration curve using the calibration result. When a new reagent is supplied to the analyzer 1, the setting unit 32 uses the calibration result that corresponds to the analytical item and the elapsed time after the unsealing of the supplied reagent so as to set the calibration curve. The input unit 33 functions as a selection unit for determining whether the setting unit 32 sets the calibration curve using the calibration result stored in the storage unit 35 or not.

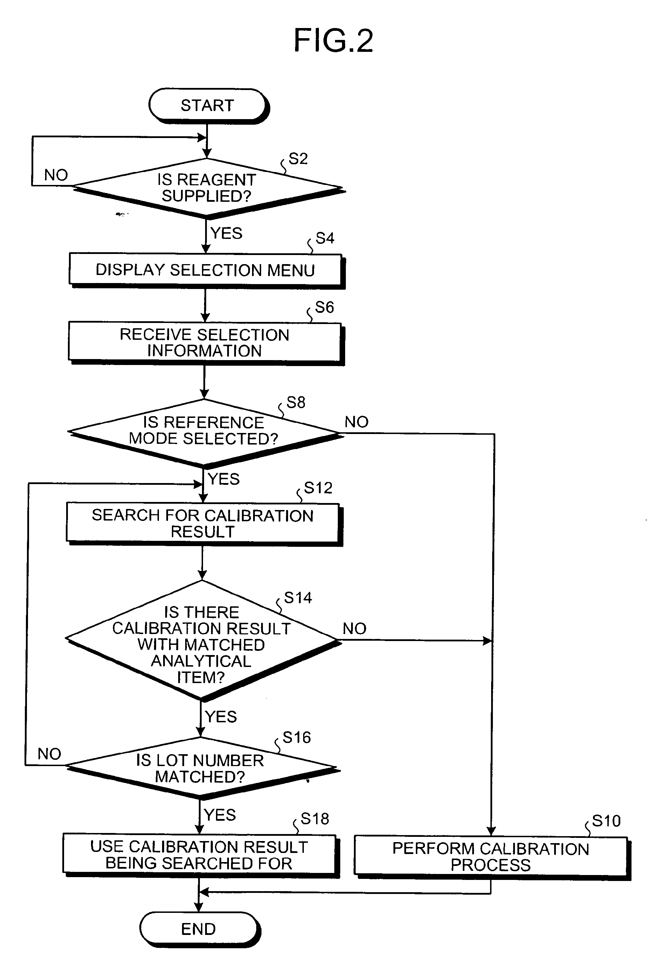

Subsequently, a calibration-result usage process at the time of supplying the reagent to the analyzer 1 is described below. FIG. 2 shows a flowchart of the calibration-result usage process at the time of supplying the reagent to the analyzer 1 shown in FIG. 1.

As shown in FIG. 2, the setting unit 32 determines whether the reagent is supplied to the reagent container 14 based on the information that is output from the reading unit 16 (Step S2). In case of using the reading unit 16 that reads information mediums of all reagent vessels 15 in the reagent container 14, the setting unit 32 determines that the reagent is newly supplied to the reagent container 14 when new reagent information is added to the received information. Also, in case of using the reading unit 16 that reads only the storage medium attached to the reagent vessel 15 that is newly supplied to the reagent container 14, the setting unit 32 determines that the reagent corresponding to received information is newly supplied to the reagent container 14 when the setting unit 32 receives the information output from the reading unit 16. The setting unit 32 repeats the determining process at Step S2 until it is determined that the reagent is supplied to the reagent container 14.

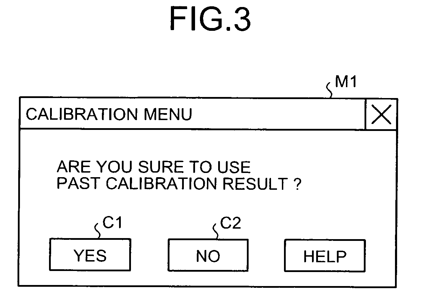

When the setting unit 32 determines that the reagent is supplied to the reagent container 14 (Step S2: Yes), the setting unit 32 makes the output unit 36 to display-output a selection menu (Step S4). The selection menu displays an option for selecting whether or not the calibration curve is set using the calibration result of a past calibration process. Specifically, as shown in FIG. 3, the setting unit 32 displays on a display screen forming the output unit 36 a calibration menu M1 that is used for selecting whether or not the calibration result of a past calibration process is used. An operator selects a selection field C1 for determining that a past calibration result is to be used or a selection field C2 for determining that a past calibration result is not to be used by using a mouse to move a cursor or clicking it. When the selection field C1 is selected, selection information indicating that the calibration result of a past calibration process is to be used is output from the input unit 33 to the control unit 31. When the selection field C2 is selected, selection information indicating that the calibration result of a past calibration process is not to be used is output from the input unit 33 to the control unit 31.

The setting unit 32 receives the selection information that is output from the input unit 33 (Step S6), and determines, based on the received information, whether the reference mode, which uses the calibration result of a past calibration process, is selected (Step S8). When the setting unit 32 determines that the reference mode is not selected (Step S8: No), the analyzer 1 performs the calibration process actually using the supplied reagent (Step S10). In this case, the setting unit 32 may display-output information such as a type of reference substance and a preparation method for the calibration process on the display screen, in addition to a calibration-process starting instruction.

On the other hand, when the setting unit 32 determines that the reference mode is selected (Step S8: Yes), the setting unit 32 searches the storage unit 35 for the calibration result that corresponds to the analytical item and the elapsed time after the unsealing of the supplied reagent (Step S12). When the setting unit 32 determines that the calibration result that corresponds to the analytical item and the elapsed time after the unsealing of the supplied reagent is not found in the storage unit 35 (Step S14: No), the setting unit 32 makes the analyzer 1 to perform the calibration process using the supplied reagent (Step S10) because there is no calibration result that can be used.

In contrast, when the setting unit 32 determines that the calibration result that corresponds to the analytical item and the elapsed time after the unsealing of the supplied reagent is found in the storage unit 35 (Step S14: Yes), the setting unit 32 determines whether the lot number of the supplied reagent is matched with the lot number of the reagent corresponding to the calibration result being searched for (Step S16). When the setting unit 32 determines that the lot number of the supplied reagent is not matched with the lot number of the reagent corresponding to the calibration result being searched for (Step S16: No), the setting unit 32 returns to Step S12 and again searches the storage unit 35 for the calibration result that corresponds to the analytical item and the elapsed time after the unsealing of the supplied reagent.

On the other hand, when the setting unit 32 determines that the lot number of the supplied reagent is matched with the lot number of the reagent corresponding to the calibration result being searched for (Step S16: Yes), the setting unit 32 uses the calibration result being searched for without performing the calibration process, sets the calibration curve (Step S18) and then ends the calibration-result usage process.

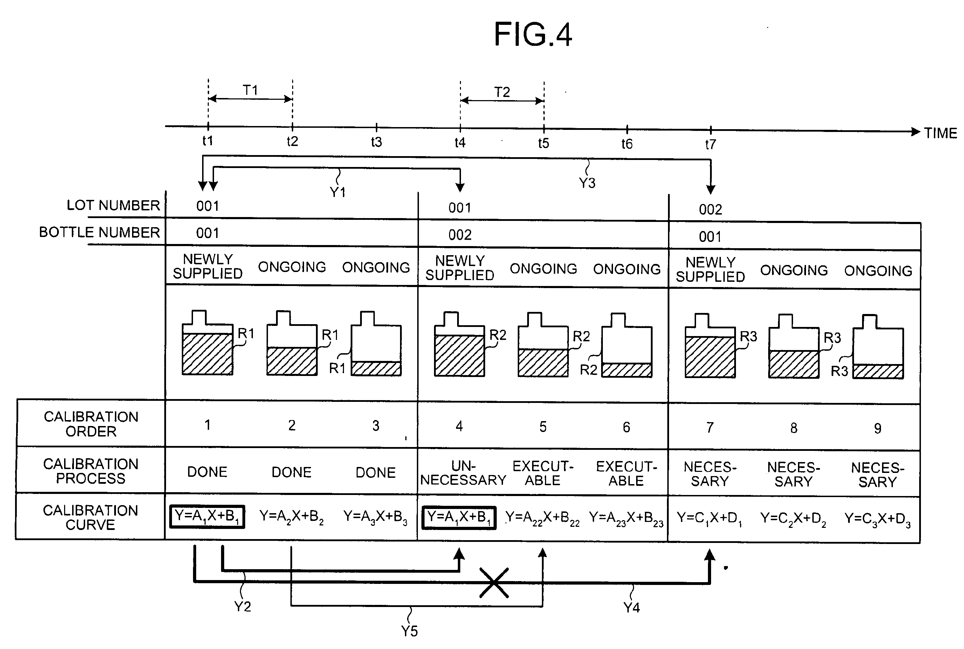

The calibration-result usage process is described with reference to FIG. 4. FIG. 4 is a diagram in which the remaining amount of the reagent used for a single analytical item and the information related to the calibration process are illustrated in association with the elapsed time. A case is described in which a reagent R1 that is supplied and unsealed at time t1 becomes empty, and a reagent R2 is newly supplied and unsealed at time t4 as shown in FIG. 4. A calibration process has been performed on the reagent R1 that is supplied at time t1 and a calibration curve, i.e., Y=A₁X+B₁, has been set. Further, the calibration process is performed on the reagent R1 at time t2 and time t3, and the calibration curves are set, respectively.

In the case where the reference mode is selected, the setting unit 32 searches the storage unit 35 for the calibration result of the reagent R1 at time t1 as the calibration result that corresponds to the time when the reagent R2 is supplied at time t4. When the setting unit 32 determines that the lot number "001" of the reagent R2 is matched with the lot number "001" of the reagent R1 as shown by the arrow Y1, the setting unit 32 uses the calibration result at time t1 as shown by the arrow Y2 and sets the calibration curve as Y=A₁X+B₁. At time t4 and time t5, the calibration process is performed, and the calibration curves, Y=A₂₂X+B₂₂, Y=A₂₃X+B₂₃, are set, respectively.

Now, a case is described in which the reagent R2 that is supplied and unsealed at time t4 becomes empty, and the reagent R3 is newly supplied at time t7. In this case, the setting unit 32 searches for the calibration result of the reagent R1 at time t1 as the calibration result that corresponds to the time when the reagent is supplied. However, when the setting unit 32 determines that the lot number "002" of the reagent R3 is not matched with the lot number "001" of the reagent R1 as shown by the arrow Y3, the setting unit 32 does not use the calibration result at time t1 as shown by the arrow Y4 and determines that the calibration process needs to be performed. As a result, the analyzer 1 performs the calibration process at the time when the reagent R3 is supplied and sets the calibration curve as Y=C₁X+D₁.

It is likely that the reagents show different characteristics depending on the elapsed time after the unsealing of the reagent. In the analyzer 1 in accordance with the embodiment, the calibration curve is set using the calibration result with the equivalent analytical item of the supplied reagent and elapsed time after the unsealing of the reagent. Because the analyzer uses the calibration result that does not cause a problem in that the reagent has different characteristics that is caused by having the different elapsed time after the unsealing of the reagent, the analyzer can maintain its analysis accuracy at a required level without performing the calibration process.

Furthermore, the analyzer 1 sets the calibration curve using the calibration result of the reagent having the same lot number as the supplied reagent. In general, the characteristics does not differ much among the reagents having the same lot number whereas the characteristics can differ significantly among the reagents having the different lot numbers. Because the analyzer 1 uses the calibration result of a reagent having the same lot number, the analyzer 1 can maintain its analysis accuracy at a required level without performing the calibration process.

As described above, in the analyzer in accordance with the embodiment, a calibration curve, which is not much affected by activity states that are different depending on the elapsed time after the unsealing of the reagent and by reagent characteristics that are different depending on lots, can be set without always performing the calibration process. Therefore, the analyzer can lessen the burden on the operator caused by the calibration process and can maintain its analysis accuracy.

In the embodiment, the selection of the reference mode is performed each time when the reagent is supplied, i.e., at the time when the calibration process originally needs to be performed. Not limited to this, for example, the reference mode can be selected beforehand. In this case, the storage unit 35 is searched for the calibration result at the time when the calibration process originally needs to be performed, so that the calibration curve can be automatically set using the calibration result with the same analytical item and the same lot number.

Also, in the embodiment, the description is made taking a case in which the timing of setting the calibration curve using the calibration result of a past calibration process is at the time of supplying the reagent as an example. Not limited to this, the timing may be other than the timing when the reagent is supplied. For example, as shown by the arrow Y5, when the calibration process cannot be performed on the reagent R2 at time t5 shown in FIG. 4, the setting unit 32 can use the calibration result of the reagent R1 that is obtained at time t2, whose post-unsealing elapsed time T1 is consistent with post-unsealing elapsed time T2 of the reagent R2, so that the calibration curve can be set as Y=A₂X+D₂. In this manner, by using the calibration result of the reagent R1 at time t2, whose post-unsealing elapsed time T1 is consistent with the post-unsealing elapsed time T2 of the reagent R2, the analyzer 1 can maintain its analysis accuracy at the almost same level as the case where the calibration process is actually performed and the calibration curve is set as Y=A₂₂X+B₂₂.

Furthermore, the analyzer 1 described in the embodiment can use programs that are prepared beforehand and executed by a computer system. Such a computer system reads out and executes programs that are stored in a predetermined storage medium in order to perform the operations of the analyzer. The predetermined storage medium is any kind of storage medium that can store therein programs read by the computer system. The storage medium can be a "portable physical medium" such as a flexible disk (FD), a CD-ROM, an MO disk, a DVD disk, a magnet-optical disk, and an IC card, or "communication medium" such as a hard disk drive (HDD) included inside or outside the computer system, which temporarily stores programs in transmitting programs. The computer system performs the operations of the analyzer by obtaining programs from a management server or other computer systems, connected via a network, and executing the same.

### INDUSTRIAL APPLICABILITY

As described, the present invention is useful for the analyzer that analyzes specimens based on the optical characteristics of the specimens, and particularly useful for performing the calibration process, in which the calibration curve is set actually using the reagent that corresponds to the analytical item.

## Claims

1. An analyzer that performs a calibration process actually using a reagent that corresponds to an analytical item, the analyzer comprising:
a storage unit that stores calibration results of already-performed calibration processes in association with elapsed time after unsealing of the reagent for each analytical item; and
a setting unit that searches the storage unit for the calibration result having the same analytical item and elapsed time after the unsealing of the reagent as the reagent to be calibration-processed and sets a calibration curve using the calibration result being searched for.

2. The analyzer according to claim 1, wherein the storage unit stores lot information of the reagent used for each calibration process in association with each calibration result; and
the setting unit sets the calibration curve using the calibration result being searched for when the lot information of the reagent to be calibration-processed is the same as the lot information of the reagent corresponding to the calibration result being searched for.

3. The analyzer according to claim 1, wherein the setting unit sets, when the reagent is newly supplied to the analyzer, the calibration curve using the calibration result having the same analytical item and elapsed time after the unsealing of the reagent as the supplied reagent.

4. The analyzer according to claim 1, wherein the setting unit further comprises a selection unit that is capable of selecting whether or not the calibration curve is set using the calibration result stored in the storage unit.
